# FASCICULE DE BREVET EUROPEEN

(11) **EP 3 202 092 B1**
(45) Date de publication et mention de la délivrance du brevet: **28.04.2021**
(21) Numéro de dépôt: 15786996.7
(22) Date de dépôt: 30.09.2015
(51) Int. Cl.: H04L 12/26, H04L 12/24

(54) **PROCÉDÉ D'ACCÈS À DES DONNÉES RELATIVES À AU MOINS UNE OPÉRATION MISE EN OEUVRE PAR UN DISPOSITIF FORMANT NOEUD D'UN RÉSEAU**
VERFAHREN ZUM ZUGRIFF AUF DATEN, DIE ZICH AUF EINEN VORGANG BEZIENEN, DER DURCH EINEN NETZKNOTEN BILDENDE VORRICHTUNG DURCHGEFÜHRT WIRD
METHOD FOR ACCESSING DATA RELATING TO AT LEAST A TASK PERFORMED BY A DEVICE WHICH IS A NETWORK NODE

(30) Priorité: 30.09.2014 FR 1459288
(43) Date de publication de la demande: 09.08.2017
(73) Titulaire: ORANGE, 75015 Paris (FR)
(72) Inventeur: LAMPIN, Quentin, F-38600 Fontaine (FR); BARTHEL, Dominique, F-38190 Bernin (FR)
(86) Numéro de dépôt international: PCT/FR2015/052611
(87) Numéro de publication internationale: WO 2016/051084

(56) Documents cités:
- US-A- 6 148 338
- US-A1- 2008 162 592
- US-A1- 2012 005 542
- US-A1- 2014 082 513

## Description

Le domaine de l'invention est celui des télécommunications.

L'invention concerne plus particulièrement le domaine de l'observation des réseaux de communication en cours de fonctionnement pour en vérifier le comportement des protocoles de communication ou en mesurer les performances. Par exemple, le document US 2008/0162592 décrit un système dans lequel des données reflétant l'activité d'un réseau sont collectées puis analysées pour améliorer la sécurité.

L'invention s'applique particulièrement aux réseaux formés d'objets communicants contraints en ressources.

Des systèmes connus permettent d'observer l'état de chaque nœud d'un réseau. Dans ces systèmes, un serveur central, appelé NOC (« Network Operation Center »), s'informe sur des paramètres de fonctionnement et les mesures de performances en interrogeant explicitement les nœuds du réseau, c'est-à-dire les objets communicants, à travers le réseau en fonctionnement. Cette interrogation est en particulier effectuée au moyen de protocoles spécifiques tels que le protocole SNMP (pour « Simple Network Management Protocol »).

D'une part, cette technique nécessite l'utilisation de bande passante au niveau du réseau. La bande passante utilisée croit avec l'intensité de l'observation.

D'autre part, les interrogations étant asynchrones par rapports aux changements d'état internes des nœuds observés, le processus d'interrogation doit être intense pour espérer observer tous les états successifs, sans cependant qu'une garantie ne soit acquise.

Ceci a pour effets négatifs de consommer d'importantes ressources au niveau des nœuds observés dès qu'une observation fine est requise.

Ces systèmes sont bien adaptés aux réseaux de nœuds dans lesquels les nœuds disposent de fortes capacités en termes de bande passante et d'énergie.

En revanche, ils ne sont pas adaptés aux réseaux de nœuds dans lesquels les nœuds sont contraints en énergie et/ou en bande passante.

Un des buts de l'invention est de remédier à des insuffisances/inconvénients de l'état de la technique et/ou d'y apporter des améliorations.

A cette fin, l'invention propose un procédé d'accès à des données relatives à au moins une opération mise en oeuvre par au moins un dispositif formant nœud d'un réseau d'une pluralité de dispositifs formant nœuds dudit réseau et aptes à communiquer via une première liaison de communication.

Le procédé d'accès comporte les étapes suivantes, mises en œuvre par un dispositif d'observation :
- Réception, à au moins un deuxième instant d'au moins un message par lequel un dispositif formant nœud signale au dispositif d'observation au moins une opération mise en oeuvre à au moins un premier instant par ledit dispositif formant nœud ;
- Enregistrement d'au moins une information sur ladite opération ;
- Sur réception d'une requête relative à au moins une opération mise en oeuvre par au moins un dispositif formant nœud, en provenance d'un terminal, via une deuxième liaison de communication, transmission d'une réponse à ladite requête, ladite réponse étant élaborée à partir d'au moins une partie des informations enregistrées.

Des messages émis par des dispositifs formant nœud d'un réseau sont reçus par un dispositif d'observation. Chaque message reçu signale la réalisation d'au moins une opération par un dispositif formant nœud d'un réseau d'une pluralité de dispositifs formant nœuds de ce réseau.

Chaque message reçu est émis par un dispositif formant nœud d'un réseau d'une pluralité de dispositifs formant nœuds de ce réseau, qui signale ainsi la réalisation d'un ou plusieurs opérations.

Un utilisateur peut ensuite interroger le dispositif d'observation et obtenir des informations sur tout ou partie des opérations réalisées par un ou plusieurs dispositifs formant nœud du réseau

L'envoi d'une requête au dispositif d'observation permet d'obtenir des informations similaires à celles qui seraient obtenues par interrogation successive des dispositifs formant noeuds. L'envoi de cette requête au dispositif d'observation, et non pas aux dispositifs formant nœud, permet d'économiser des ressources des dispositifs formant nœud.

De plus, une seule requête permet d'obtenir des informations relatives à plusieurs nœuds.

Selon une caractéristique particulière du procédé d'accès, l'intervalle temporel entre le premier instant et le deuxième instant est inférieur à une valeur de seuil prédéfinie.

L'intervalle temporel entre la réalisation d'une opération et la réception par le dispositif d'observation du message signalant cette opération est inférieur à une valeur de seuil prédéfinie. Le dispositif d'observation est ainsi informé des opérations réalisées par les dispositifs formant nœud au fur et à mesure que ces opérations sont réalisées.

Un message signalant une opération est transmis par le dispositif formant nœud du réseau en synchronisation avec la mise en oeuvre de l'opération signalée.

Dans le cas où la valeur de seuil est petite par rapport à la période typique d'évolution du système, le dispositif d'observation est informé, en temps réel, de la mise en oeuvre d'une opération par un dispositif formant nœud.

Selon un mode de réalisation particulier du procédé d'accès, ledit message est reçu via une liaison de communication établie entre le dispositif d'observation et un dispositif relais apte à communiquer avec le dispositif formant nœud.

L'utilisation d'un dispositif relais, apte à recevoir un message émis par un dispositif formant nœud d'un réseau et à le retransmettre au dispositif d'observation permet d'utiliser des moyens peu couteux en ressources pour transmettre le message au niveau du dispositif formant nœud et ainsi de perturber le moins possible le fonctionnement du dispositif formant noeud.

Selon une caractéristique de ce mode de réalisation, le message reçu par le dispositif d'observation contient un identifiant du dispositif formant nœud inséré par ledit dispositif relais et/ou une date insérée par le dispositif de relais.

L'insertion d'un identifiant de dispositif formant nœud, au niveau du dispositif relais plutôt qu'au niveau du dispositif formant nœud, permet d'économiser les ressources du dispositif formant nœud.

L'insertion d'une date au niveau du dispositif relais plutôt qu'au niveau du dispositif formant nœud, permet également d'économiser les ressources du dispositif formant nœud.

Selon un mode de réalisation particulier du procédé d'accès, utilisé seul ou en combinaison avec les autres modes de réalisation, ladite au moins une information sur ladite opération est enregistrée en association avec une date comprise dans ledit intervalle temporel.

L'enregistrement d'une date en association avec l'information sur une opération permet de pouvoir observer le comportement d'un ou plusieurs dispositifs au cours du temps.

La date enregistrée est, selon les modes de réalisation, la date d'émission du message par un nœud, la date de réception du message par un dispositif relais, la date de réception du message par le dispositif d'observation...

Selon une caractéristique particulière du procédé d'accès, la date enregistrée en association avec le message lors de l'étape d'enregistrement est la date de réception du message ou une date contenue dans le message reçu

L'invention se rapporte également à un procédé de transmission de données relatives à au moins une opération mise en oeuvre par au moins un dispositif formant nœud d'un réseau d'une pluralité de dispositifs formant nœuds dudit réseau et aptes à communiquer via une première liaison de communication.

Le procédé de transmission comporte une étape de transmission par un dispositif formant nœud, à au moins un deuxième instant d'au moins un message signalant au moins une opération mise en oeuvre à au moins un premier instant par ledit dispositif formant nœud.

Les messages sont émis spontanément par les dispositifs formant nœuds qui signalent ainsi l'exécution des opérations qu'ils réalisent.

Selon une caractéristique particulière du procédé de transmission, ledit au moins un message est transmis via une troisième liaison de communication, différente de ladite première liaison de communication.

Ainsi, les dispositifs formant nœuds du réseau communiquent avec les autres dispositifs du réseau via une première liaison et signalent la mise en oeuvre des opérations qu'ils réalisent via une autre liaison. L'utilisation d'une liaison de communication différente de la première liaison pour signaler la mise en œuvre d'une opération permet de ne pas perturber l'échange de messages entre les différents dispositifs formant nœuds du réseau.

L'invention se rapporte aussi à un dispositif d'observation comportant :
- un module de réception, à au moins un deuxième instant d'au moins un message par lequel un dispositif formant nœud d'un réseau d'une pluralité de dispositifs formant nœuds dudit réseau et aptes à communiquer via une première liaison de communication, signale au moins une opération mise en oeuvre à au moins un premier instant par ledit dispositif formant nœud ;
- un module d'enregistrement d'au moins une information sur ladite opération ;
- un module d'envoi pour transmettre sur réception d'une requête relative à au moins une opération mise en oeuvre par au moins un dispositif formant nœud, en provenance d'un terminal, via une deuxième liaison de communication, une réponse à ladite requête, ladite réponse étant élaborée à partir d'au moins une partie des informations enregistrées.

Le dispositif d'observation recueille les messages signalant l'exécution d'opérations mises en oeuvre par une pluralité de dispositifs d'un réseau. Grâce aux informations reçues, il peut ensuite répondre aux requêtes émises par un terminal sans perturber les dispositifs du réseau.

L'invention se rapporte également à un dispositif formant nœud d'un réseau d'une pluralité de dispositifs formant nœuds dudit réseau et aptes à communiquer via une première liaison de communication.

Ce dispositif formant nœud comporte un module de transmission, à au moins un deuxième instant d'au moins un message signalant au moins une opération mise en oeuvre à au moins un premier instant par ledit dispositif formant nœud.

Selon une implémentation préférée, les différentes étapes du procédé d'accès, respectivement du procédé de transmission, selon l'invention sont mises en oeuvre par un logiciel ou programme d'ordinateur.

L'invention concerne ainsi un logiciel ou programme, susceptible d'être exécuté par un ordinateur ou par un processeur de données, ce logiciel / programme comportant des instructions pour commander l'exécution des étapes d'un procédé d'accès ou d'un procédé de transmission. Ces instructions sont destinées à être stockées dans une mémoire d'un dispositif informatique, chargées puis exécutées par un processeur de ce dispositif informatique.

Ce logiciel / programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

Le dispositif informatique peut être mis en oeuvre par une ou plusieurs machines physiquement distinctes et présente globalement l'architecture d'un ordinateur, incluant des constituants d'une telle architecture: mémoire(s) de données, processeur(s), bus de communication, interface(s) matérielle(s) pour la connexion de ce dispositif informatique à un réseau ou un autre équipement, interface(s) utilisateur, etc.

L'invention concerne aussi un support d'informations lisible par un processeur de données, et comportant des instructions d'un programme tel que mentionné ci-dessus. Le support d'informations peut être n'importe quelle entité ou dispositif capable de stocker le programme.

D'autres particularités et avantages de la présente invention apparaitront dans la description suivante d'un mode de réalisation donné à titre d'exemple non limitatif, en référence aux dessins annexés, dans lesquels :
- la figure 1 est un schéma général illustrant un système selon un premier mode de réalisation de l'invention,
- la figure 2 est un schéma bloc représentant un dispositif formant nœud d'un réseau, un dispositif relai et un dispositif d'observation selon un mode de réalisation de l'invention,
- la figure 3 est un organigramme illustrant les différentes étapes d'un procédé de transmission et d'un procédé d'accès selon un premier mode de réalisation de l'invention,
- la figure 4 est un organigramme illustrant les différentes étapes d'un procédé de transmission selon un deuxième mode de réalisation de l'invention.

L'invention est mise en oeuvre au moyen de composants logiciels et/ou matériels. Dans cette optique, le terme "module" peut correspondre dans ce document aussi bien à un composant logiciel, qu'à un composant matériel ou à un ensemble de composants matériels et/ou logiciels, apte à mettre en œuvre une fonction ou un ensemble de fonctions, selon ce qui est décrit ci-dessous pour le module concerné.

Un composant logiciel correspond à un ou plusieurs programmes d'ordinateur, un ou plusieurs sous-programmes d'un programme, ou de manière plus générale à tout élément d'un programme ou d'un logiciel. Un tel composant logiciel est stocké en mémoire puis chargé et exécuté par un processeur de données d'une entité physique (terminal, serveur, passerelle, set-top-box, routeur, etc) et est susceptible d'accéder aux ressources matérielles de cette entité physique (mémoires, supports d'enregistrement, bus de communication, cartes électroniques d'entrées/sorties, interfaces utilisateur, etc).

De la même manière, un composant matériel correspond à tout élément d'un ensemble matériel (ou hardware). Il peut s'agir d'un composant matériel programmable ou avec processeur intégré pour l'exécution de logiciel, par exemple un circuit intégré, une carte à puce, une carte électronique pour l'exécution d'un micrologiciel (firmware), etc.

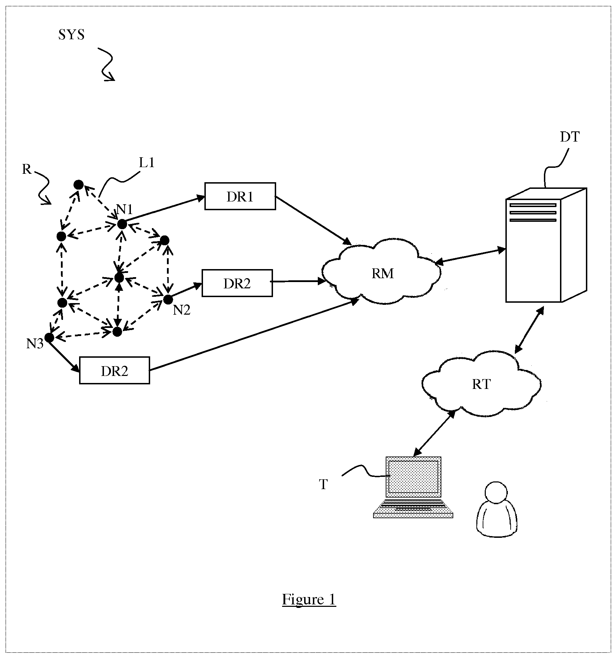

Un premier mode de réalisation d'un procédé de transmission et d'un procédé d'accès va maintenant être décrit en référence aux figures 1 à 3.

La **figure 1** représente un système SYS comprenant une pluralité de dispositifs N1, N2, N3... répartis dans une zone géographique, un dispositif d'observation DT et un terminal T.

Un dispositif de la pluralité est par exemple un capteur, par exemple un capteur de mesures, tel qu'un compteur d'eau ou d'électricité.

Plus généralement, un tel dispositif est un objet communicant, c'est-à-dire un dispositif apte à transmettre des données à destination d'un ou plusieurs autres dispositifs de la pluralité et/ou à recevoir des données en provenance d'un autre dispositif de la pluralité.

Chaque dispositif est ainsi apte à communiquer avec un ou plusieurs autres dispositifs de la pluralité via une liaison de communication L1.

La liaison de communication L1 représente une première liaison de communication au sens de l'invention.

La liaison de communication L1 est par exemple une liaison sans fil, par exemple une liaison radio.

A titre d'alternative, la liaison de communication L1 est une liaison de type Wifi ou une liaison de type Bluetooth ou encore une liaison filaire.

Les dispositifs N1, N2...sont ainsi organisés en un réseau de communication R et chaque dispositif N1, N2, N3... de la pluralité est un dispositif formant nœud de ce réseau R.

Chaque dispositif de la pluralité est apte à communiquer avec un autre dispositif de la pluralité soit directement soit par l'intermédiaire d'un ou plusieurs autres dispositifs de la pluralité.

Chaque dispositif de la pluralité est également apte à transmettre des données destinées au dispositif d'observation DT.

Dans le mode de réalisation décrit, les données transmises par un dispositif de la pluralité à destination du dispositif d'observation DT transitent par un dispositif relais associé à ce dispositif de la pluralité.

Dans le mode de réalisation décrit, un dispositif relais est associé à chaque dispositif formant nœud et chaque dispositif relais est associé à un seul dispositif de la pluralité.

A titre d'alternative, un dispositif relais est associé à plusieurs dispositifs formant nœud.

Pour des raisons de clarté de la figure 1, seuls des dispositifs relais DR1, DR2, DR3 respectivement associés aux dispositifs N1, N2, N3 ont été représentés.

Les dispositifs relais sont aptes à communiquer avec le dispositif d'observation DT via un réseau de communication RM.

Le terminal T est un terminal d'un opérateur, par exemple un ordinateur de type PC (pour « Personal Computer »). Le terminal T est apte à communiquer avec le dispositif d'observation DT via un réseau de communication RT.

Le réseau de communication RT est par exemple le réseau Internet.

A titre d'alternative, le réseau de communication RT est un réseau de type Ethernet.

Le terminal T est apte à communiquer avec le dispositif d'observation DT via une liaison de communication LT.

La liaison de communication LT entre le terminal T et le dispositif d'observation DT est une liaison bidirectionnelle.

La liaison de communication LT représente une deuxième liaison de communication au sens de l'invention.

A titre d'alternative, le dispositif d'observation DT et le terminal T communiquent via une liaison de communication dédiée, par exemple une liaison filaire.

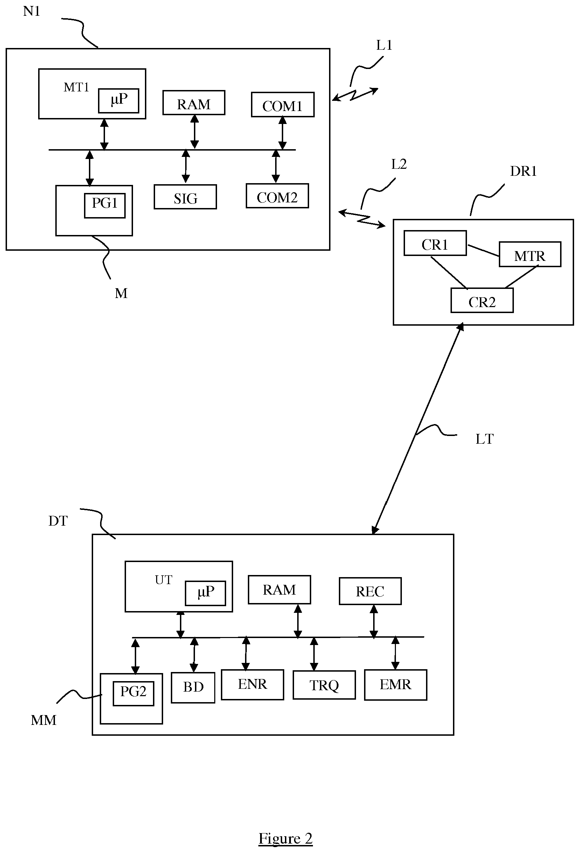

La **figure 2** est un schéma bloc représentant un dispositif de la pluralité, par exemple le dispositif N1, le dispositif relais DR1 associé à ce dispositif N1 et le dispositif d'observation DT du système SYS.

Le dispositif NI comporte de façon connue, notamment une unité de traitement MT1 équipée d'un microprocesseur, une ou plusieurs mémoires de stockage M, par exemple de type EEPROM, et une mémoire vive de type RAM.

Le dispositif formant nœud NI comporte également un premier module de communication COM1 pour communiquer avec un ou plusieurs autres dispositifs de la pluralité via la première liaison de communication L1.

Il comporte également un deuxième module de communication COM2 pour communiquer avec le dispositif relais DR1.

Le dispositif NI et le dispositif relais DR1 associé communiquent via une liaison de communication L2, par exemple une liaison sans fil en champ proche.

La liaison de communication L2 représente une troisième liaison de communication au sens de l'invention.

Dans le mode de réalisation décrit, la troisième liaison L2 est différente de la première liaison L1.

Par exemple, la première liaison de communication L1 est une liaison radio d'une première fréquence prédéterminée et la liaison de communication L2 entre le dispositif NI et le dispositif relais associé DR1 est une liaison radio d'une deuxième fréquence prédéterminée.

A titre d'alternative, la première liaison de communication L1 est une liaison sans fil de type Wifi, Bluetooth... ou encore une liaison filaire.

Egalement, à titre d'alternative, la liaison de communication L2 est une liaison sans fil en champ proche, une liaison sans fil de type Wifi ou Bluetooth, une liaison filaire...

Egalement, à titre d'alternative, le dispositif formant nœud NI et le dispositif relais DR1 communiquent via la première liaison de communication L1.

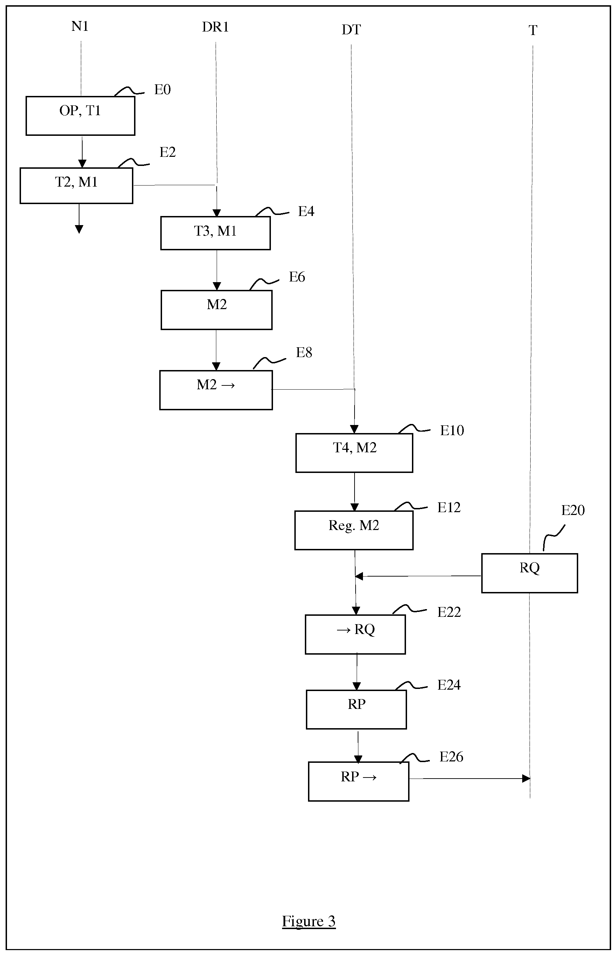

La mémoire de stockage M comporte des registres mémorisant un programme d'ordinateur PG1 comportant des instructions de programme adaptées à mettre en oeuvre un procédé de transmission de données selon un mode de réalisation de l'invention décrit ultérieurement en référence à la figure 3.

Le dispositif formant nœud N1 comporte également un module de signalisation SIG.

Le dispositif relais DR1 comporte un premier module de communication CR1, un deuxième module de communication CR2 et un module de traitement MTR.

Le dispositif d'observation DT comporte une unité de traitement UT équipée d'un microprocesseur, une ou plusieurs mémoires de stockage MM, par exemple de type EEPROM, et une mémoire vive de type RAM.

Le dispositif d'observation DT comporte notamment une mémoire de stockage BD.

Le dispositif d'observation DT comporte également un module de réception REC, un module d'enregistrement ENR, un module de traitement de requêtes TRQ et un module de communication EMR.

Le dispositif d'observation DT peut comporter de manière classique et non exhaustive les éléments suivants: un clavier, un écran de visualisation, un module d'affichage pour l'affichage sur l'écran de visualisation...

La mémoire de stockage MM comporte des registres mémorisant un programme d'ordinateur PG2 comportant des instructions de programme adaptées à mettre en oeuvre un procédé d'accès à des données selon un mode de réalisation de l'invention décrit ultérieurement en référence à la figure 3.

Un mode de réalisation d'un procédé de transmission et d'un procédé d'accès mis en oeuvre dans le système SYS, va maintenant être décrit en référence à la **figure 3****.**

Lors d'une première étape préalable E0, le dispositif NI exécute, c'est-à-dire met en œuvre, une opération OP, à un premier instant T1.

L'opération réalisée est par exemple un envoi de données à destination d'un ou plusieurs dispositifs du réseau R ou une réception de données en provenance d'un autre dispositif formant nœud du réseau R ou encore un changement d'état interne du dispositif.

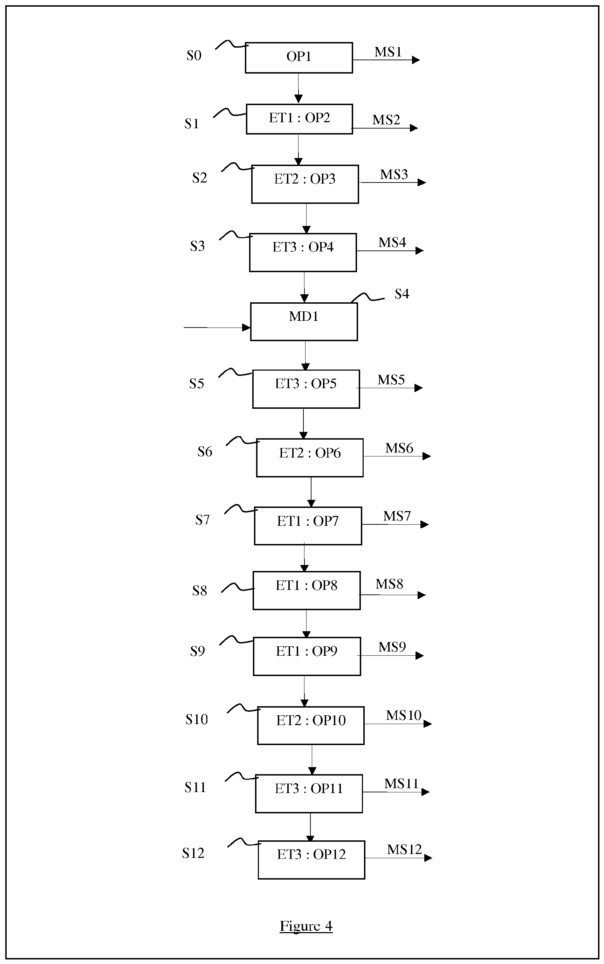

Des exemples particuliers d'opérations mises en oeuvre sont décrits dans la suite de la description en référence à la figure 4.

Lors d'une étape E2, le module de signalisation SIG du dispositif N1 génère un premier message M1 et commande la transmission, par le deuxième module de communication COM2, du message généré M1.

Le message M1 permet au dispositif NI de signaler la mise en oeuvre de l'opération OP.

Le message M1 est par exemple transmis simultanément à la mise en oeuvre de l'opération OP.

Le message M1 est transmis spontanément par le dispositif N1, via la liaison de communication L2.

Le message M1 contient un identifiant de l'opération OP mise en œuvre.

A titre d'alternative, le message M1 comprend également un identifiant d'une entité fonctionnelle du dispositif formant nœud ayant mis en oeuvre l'opération OP et/ou un identifiant du dispositif N1.

Par exemple, les entités fonctionnelles sont des entités logicielles aptes à gérer les différentes couches d'une pile protocolaire.

Egalement, à titre d'alternative, le message M1 comprend la date T1 de mise en œuvre de l'opération OP par le dispositif N1.

L'étape E2 est réalisée à un instant T2.

Le message M1 est reçu à un instant T3, par le module de communication CR1 du dispositif relais DR1 associé au dispositif NI lors d'une étape E4.

Dans le mode de réalisation décrit, l'étape E4 est suivie d'une étape E6 lors de laquelle le module de traitement MTR du dispositif relais DR1 construit un deuxième message M2 en fonction du message M1 reçu.

Le deuxième message M2 contient, outre les données contenues dans le message M1, un identifiant ID1 du dispositif N1.

Le module de traitement MTR du dispositif relais DR1 peut également inclure dans le deuxième message M2, la date T3 de réception par le dispositif relais DR1, du premier message M1.

Lors d'une étape E8, le module de traitement MTR du dispositif relais DR1 commande la transmission du deuxième message M2 par le module de communication CR2 du dispositif relais à destination du dispositif d'observation DT.

Le deuxième message M2 est reçu à un instant T4, par le module de réception REC du dispositif d'observation DT, lors d'une étape E10.

L'étape E10 est suivie d'une étape E12 lors de laquelle tout ou partie des informations contenues dans le deuxième message M2 est enregistré par le module d'enregistrement ENR du dispositif d'observation DT, dans une mémoire du dispositif d'observation DT, par exemple la mémoire BD.

Ainsi, le module d'enregistrement ENR du dispositif NI enregistre au moins une information sur l'opération OP.

A titre d'alternative, ces informations sont enregistrées dans une mémoire externe au dispositif d'observation DT et accessible par ce dispositif d'observation DT.

Les informations enregistrées contiennent une date.

Dans le mode de réalisation décrit où le deuxième message M2 ne contient pas de date, les informations sont enregistrées en association avec la date de réception T4 du message M2 par le dispositif de d'observation DT.

L'instant T4 représente un deuxième instant au sens de l'invention.

Dans le mode de réalisation décrit, l'intervalle temporel entre l'instant T1 et l'instant T4 est inférieur à une valeur de seuil VS prédéfinie.

Dans le cas où la valeur de seuil VS est petite, le dispositif d'observation DT est informé, en temps réel, de la mise en oeuvre de l'opération OP.

La valeur de seuil VS est notamment considérée comme petite si l'opération OP est signalée dès sa mise en œuvre, c'est-à-dire si l'intervalle temporel entre les instants T1 et T2 peut être considéré comme négligeable.

Les étapes E0 à E12 sont réitérées lors de la mise en œuvre d'une ou plusieurs autres opérations par un des dispositifs formant nœud du réseau R.

Ainsi, des messages en provenance du dispositif NI ou d'autres dispositifs du réseau R sont reçus par le dispositif d'observation DT et enregistrés dans la mémoire BD.

La mémoire BD contient ainsi des messages datés relatifs à une pluralité d'opérations réalisées par un ou plusieurs dispositifs formant nœud du réseau R.

Lors d'une étape E20, le terminal T envoie une requête RQ à destination du dispositif d'observation DT, via la liaison de communication LT.

La requête RQ contient par exemple un ou plusieurs identifiants de dispositifs formant nœud du réseau R.

Elle peut également comprendre une ou plusieurs dates, par exemple deux dates définissant un intervalle temporel.

Les données contenues dans la requête RQ sont par exemple saisies par l'utilisateur du terminal T, au moyen d'une interface graphique affichée sur un écran du terminal et d'une interface utilisateur.

La requête RQ est reçue par le module de communication EMR du dispositif d'observation DT lors d'une étape E22.

Lors d'une étape E24, le module de traitement de requêtes TRQ du dispositif d'observation DT accède à la mémoire BD et élabore une réponse à la requête RQ en fonction des données contenues dans la requête RQ et d'au moins une partie des informations enregistrées dans la mémoire BD.

Le module de traitement de requêtes TRQ du dispositif d'observation DT commande ensuite la transmission par le module de communication EMR du dispositif d'observation DT, d'une réponse RP à la requête RQ. La réponse RP est transmise au terminal T via la liaison de communication LT lors d'une étape E26.

Par exemple, la requête RQ contient un identifiant d'un nœud et des valeurs définissant un intervalle temporel et la réponse RP contient les états successifs pris par le nœud au cours de cet intervalle.

A titre d'alternative, la requête RQ permet d'obtenir une trajectoire effectivement suivie par un paquet de données dans le réseau R.

Les étapes E0 et E2, mises en oeuvre par le dispositif N1, représentent les étapes du procédé de transmission.

Les étapes E10, E12, E22, E24 et E26, mises en oeuvre par le dispositif d'observation DT, représentent les étapes du procédé d'accès.

Dans le mode de réalisation décrit, les messages signalant des opérations mises en oeuvre au sein d'un dispositif formant nœud transitent entre le dispositif formant nœud et le dispositif d'observation DT, via un dispositif relais.

En variante, les messages sont émis via la première liaison de communication et le réseau R et reçus par le dispositif d'observation DT, sans transiter par un dispositif relais.

Un deuxième mode de réalisation d'un procédé de transmission de données mis en oeuvre par un dispositif formant nœud NI d'un réseau R d'une pluralité de dispositifs, va maintenant être décrit en référence à la **figure 4****.**

Dans ce mode de réalisation, le dispositif NI comprend plusieurs entités fonctionnelles, par exemple 3 entités fonctionnelles ET1, ET2 et ET3.

L'entité ET1 est par exemple une entité applicative apte à traiter des données applicatives reçues ou à émettre.

L'entité ET2 est par exemple une entité apte à encapsuler les messages applicatifs provenant de l'entité ET1 et à décapsuler les messages applicatifs destinés à l'entité ET1.

L'entité ET3 est par exemple une entité apte à recevoir et à émettre des signaux sur la liaison de communication L1, c'est-à-dire les signaux reçus d'un autre dispositif du réseau R ou émis à destination d'un autre dispositif du réseau R.

Lors d'une étape préalable S0 d'initialisation, par exemple suite à l'installation et à la mise en marche du dispositif N1, le dispositif NI met en oeuvre une opération d'initialisation OP1 et signale la mise en oeuvre de cette opération d'initialisation OP1 en envoyant un message MS1 à destination du dispositif d'observation DT. Le dispositif NI signale ainsi sa présence auprès du dispositif d'observation DT.

Le message MS1 contient un identifiant « EntityBootstrap » de l'opération OP1 et un identifiant du dispositif N1.

Egalement, lors de la phase d'initialisation, chacune des entités ET1, ET2 et ET3 met en oeuvre une opération d'initialisation.

Plus précisément, lors d'une étape S1, l'entité ET1 met en oeuvre une opération d'initialisation OP2 et déclenche l'envoi par le dispositif NI d'un message MS2 à destination du dispositif d'observation DT. Le message MS2 contient l'identifiant d'opération « EntityBootstrap » et un identifiant IdE1 de l'entité ET1.

Lors d'une étape S2, l'entité ET2 met en oeuvre une opération d'initialisation OP3 et déclenche l'envoi par le dispositif NI d'un message MS3 à destination du dispositif d'observation DT. Le message MS3 contient l'identifiant d'opération « EntityBootstrap » et un identifiant IdE2 de l'entité ET2.

Lors d'une étape S3, l'entité ET3 met en oeuvre une opération d'initialisation OP4 et déclenche l'envoi par le dispositif NI d'un message MS4 à destination du dispositif d'observation DT. Le message MS4 contient l'identifiant d'opération « EntityBootstrap » et un identifiant IdE3 de l'entité ET3.

Lors d'une étape S4, ultérieure aux étapes S0 à S3, le dispositif NI reçoit un signal représentatif d'un message de données MD1 en provenance d'un autre dispositif formant nœud du réseau R.

Le message MD1 est reçu par l'entité ET3 du dispositif N1. Lors d'une étape S5, l'entité ET3 signale la mise en oeuvre d'une opération OP5 de réception de données en commandant l'envoi d'un message MS5 à destination du dispositif d'observation DT. Le message MS5 contient un identifiant d'opération « frameReceive » et un identifiant IdE3 de l'entité ET3.

L'entité ET3 démodule le signal reçu et transmet le signal démodulé à l'entité ET2. Lors d'une étape S6, l'entité ET2 met en oeuvre une opération OP6 de prise en charge du signal et signale l'opération OP6 par l'envoi d'un message MS6 contenant un identifiant d'opération « frameNotify » et l'identifiant IdE2 de l'entité ET2.

Suite à la prise en charge du signal, l'entité ET2 transmet à l'entité ET1 tout ou partie des données contenues dans le message MD1. L'entité LT1 reçoit les données transmises par l'entité ET2 et signale une opération OP7 de prise en charge de ces données par l'envoi d'un message MS7 contenant un identifiant d'opération « frameNotify » et l'identifiant IdE1 de l'entité ET1 (étape S7).

Lors d'une étape S8, l'entité ET1 analyse les données transmises par l'entité ET2 et signale cette opération d'analyse OP8 par l'envoi d'un message MS8 contenant un identifiant d'opération « frameConsume » et l'identifiant IdE1 de l'entité ET1.

Lors d'une étape S9, l'entité ET1 du dispositif NI génère un nouveau message de données MD2 et signale cette opération de génération de données OP9 par l'envoi d'un message MS9 contenant un identifiant d'opération « frameProduce » et l'identifiant IdE1 de l'entité ET1.

Lors d'une étape S10, l'entité ET1 transmet le message de données MD2 à l'entité ET2 et l'entité ET2, ayant reçu le message de données MD2, signale une opération OP10 de prise en charge du message MD2 par l'envoi d'un message MS10 contenant un identifiant d'opération « frameNotify » et l'identifiant IdE2 de l'entité ET2.

L'entité ET2 encapsule le message de données MD2 et transmet le message encapsulé à l'entité ET3. Suite à la réception du message encapsulé, l'entité ET3 signale une opération OP11 de prise en charge du message encapsulé par l'envoi d'un message MS11 contenant un identifiant d'opération « frameNotify » et l'identifiant IdE3 de l'entité ET3 (étape S11).

Lors d'une étape S12, l'entité ET3 envoie un signal radio correspondant au message de données MD2 et signale cette opération OP12 par l'envoi d'un message MS12 contenant un identifiant d'opération « frameTransmit » et l'identifiant IdE3 de l'entité E3.

Le dispositif d'observation DT reçoit ainsi successivement les messages MS1, MS2...MS12.

Un utilisateur, peut ensuite par interrogation du dispositif d'observation DT, à partir par exemple du terminal T, avoir connaissance des différentes opérations réalisées par le dispositif N1.

Dans le mode de réalisation décrit, les opérations mises en œuvres et signalées par les dispositifs formant nœuds sont la déclaration de présence d'un nœud dans le réseau, la déclaration de présence d'une entité d'un nœud, l'envoi de données, la réception de données, la prise en charge de données par une entité.

D'autres opérations peuvent être signalées.

Par exemple, des opérations signalées sont relatives à un nœud, à une entité d'un nœud, à un lien entre deux entités d'un nœud ou encore à une trame de données, c'est-à-dire à des données applicatives.

Les opérations signalées sont par exemple sont par exemple :
- la déclaration de la présence d'un nœud, d'une entité, d'un lien ou d'une trame,
- la déclaration d'un état d'un nœud, d'une entité, d'un lien ou d'une trame
- la mise à jour d'un état d'un nœud, d'une entité, d'un lien ou d'une trame
- la suppression d'un nœud, d'une entité, d'un lien ou d'une trame,
- l'envoi ou la réception d'une trame ou encore le traitement d'une trame au niveau d'une entité.

Le format des messages signalant une opération est par exemple normalisé.

Chaque message signalant une opération contient par exemple un identifiant de nœud et/ou d'entité sur 32 bits, un identifiant d'opération sur 8 bits et éventuellement un champ contenant des informations complémentaires.

Dans les exemples de réalisation décrit, chaque message transmis à destination du dispositif d'observation DT signale une seule opération.

A titre d'alternative, un tel message peut signaler plusieurs opérations.

## Revendications

1. Procédé d'accès à des données relatives à au moins une opération mise en oeuvre par au moins un dispositif (N1) formant nœud d'un réseau (R) d'une pluralité de dispositifs (N1, N2, N3) formant nœuds dudit réseau et aptes à communiquer entre eux via une première liaison de communication (L1), caractérisé en qu'il comporte les étapes suivantes, mises en oeuvre par un dispositif d'observation (DT) connecté à un terminal (T) distinct de ladite pluralité de dispositifs :
réception (E10), à au moins un deuxième instant (T4) d'au moins un message (M2) par lequel un dispositif formant nœud (N1) signale au dispositif d'observation (DT) au moins une opération (OP) mise en oeuvre à au moins un premier instant (T1) par ledit dispositif formant nœud (N1), ladite au moins une opération étant relative à des données émises ou reçues par ledit dispositif via la première liaison de communication ou à un changement d'état interne dudit dispositif ;
enregistrement (E12) d'au moins une information sur ladite opération ;
sur réception d'une requête (RQ) relative à au moins une opération mise en oeuvre par au moins un dispositif formant nœud, en provenance d'un terminal (T), via une deuxième liaison de communication (LT), transmission (E26) d'une réponse (RP) à ladite requête, ladite réponse (RP) étant élaborée à partir d'au moins une partie des informations enregistrées.

2. Procédé d'accès selon la revendication 1 dans lequel l'intervalle temporel entre le premier instant (T1) et le deuxième instant (T4) est inférieur à une valeur de seuil (VS) prédéfinie.

3. Procédé d'accès selon la revendication 1 dans lequel ledit message (M2) est reçu via une liaison de communication établie entre le dispositif d'observation et un dispositif relais apte à communiquer avec le dispositif formant nœud.

4. Procédé d'accès selon la revendication 3 dans lequel le message reçu (M2) contient un identifiant du dispositif formant nœud inséré par ledit dispositif relais et/ou une date insérée par le dispositif de relais.

5. Procédé d'accès selon la revendication 1 dans lequel ladite au moins une information sur ladite opération est enregistrée en association avec une date comprise dans ledit intervalle temporel.

6. Procédé d'accès selon la revendication 1 dans lequel la date enregistrée en association avec le message lors de l'étape d'enregistrement est la date de réception du message ou une date contenue dans le message reçu

7. Dispositif d'observation (DT) caractérisé en qu'il comporte:
un module de réception (REC), à au moins un deuxième instant (T4) d'au moins un message (M2) par lequel un dispositif formant nœud (N1) d'un réseau (R) d'une pluralité de dispositifs (N1, N2, N3) formant nœuds dudit réseau et aptes à communiquer via une première liaison de communication (L1), signale au moins une opération (OP) mise en oeuvre à au moins un premier instant (T1) par ledit dispositif formant nœud (N1), ladite au moins une opération étant relative à des données émises ou reçues par ledit dispositif via la première liaison de communication ou à un changement d'état interne dudit dispositif;
un module d'enregistrement (ENR) d'au moins une information sur ladite opération ;
un module d'envoi (EMR) pour transmettre sur réception d'une requête relative à au moins une opération mise en oeuvre par au moins un dispositif formant nœud, en provenance d'un terminal distinct de ladite pluralité de dispositifs, via une deuxième liaison de communication, une réponse à ladite requête, ladite réponse étant élaborée à partir d'au moins une partie des informations enregistrées.

8. Produit programme d'ordinateur comprenant des instructions pour la mise en oeuvre d'un procédé d'accès selon l'une des revendications 1 à 6 lorsqu'il est chargé et exécuté par un processeur.

9. Support d'informations lisible par un processeur de données, et comportant des instructions d'un programme pour l'exécution d'un procédé d'accès selon l'une des revendications 1 à 6.

## Patentansprüche

1. Verfahren zum Zugriff auf Daten bezogen auf mindestens eine Operation, die von mindestens einer knotenbildenden Vorrichtung (N1) eines Netzwerks (R) aus einer Mehrzahl von Vorrichtungen (N1, N2, N3) durchgeführt wird, die Knoten des Netzwerks bilden und geeignet sind, über eine erste Kommunikationsverbindung (L1) miteinander zu kommunizieren, **dadurch gekennzeichnet, dass** es die folgenden Schritte aufweist, die von einer Überwachungsvorrichtung (DT) durchgeführt werden, die mit einem Endgerät (T) verbunden ist, das von der Mehrzahl von Vorrichtungen gesondert ist:
Empfangen (E10), zu mindestens einem zweiten Zeitpunkt (T4), mindestens einer Nachricht (M2), durch welche eine knotenbildende Vorrichtung (N1) der Überwachungsvorrichtung (DT) mindestens eine Operation (OP) meldet, die zu mindestens einem ersten Zeitpunkt (T1) von der knotenbildenden Vorrichtung (N1) durchgeführt wird, wobei die mindestens eine Operation auf Daten, die von der Vorrichtung über die erste Kommunikationsverbindung gesendet oder empfangen werden, oder auf eine interne Zustandsänderung der Vorrichtung bezogen ist;
Speichern (E12) mindestens einer Information über die Operation;
bei Empfang einer Anfrage (RQ) bezogen auf mindestens eine Operation, die von mindestens einer knotenbildenden Vorrichtung durchgeführt wird, von einem Endgerät (T) über eine zweite Kommunikationsverbindung (LT), Übertragen (E26) einer Antwort (RP) auf die Anfrage, wobei die Antwort (RP) ausgehend von mindestens einem Teil der gespeicherten Informationen erstellt ist.

2. Zugriffsverfahren nach Anspruch 1, wobei das Zeitintervall zwischen dem ersten Zeitpunkt (T1) und dem zweiten Zeitpunkt (T4) kleiner als ein vorgegebener Schwellenwert (VS) ist.

3. Zugriffsverfahren nach Anspruch 1, wobei die Nachricht (M2) über eine Kommunikationsverbindung empfangen wird, die zwischen der Überwachungsvorrichtung und einer Relaisvorrichtung, die geeignet ist, mit der knotenbildenden Vorrichtung zu kommunizieren, hergestellt ist.

4. Zugriffsverfahren nach Anspruch 3, wobei die empfangene Nachricht (M2) eine Kennung der knotenbildenden Vorrichtung, die von der Relaisvorrichtung eingefügt wird, und/oder ein Datum, das von der Relaisvorrichtung eingefügt wird, enthält.

5. Zugriffsverfahren nach Anspruch 1, wobei die mindestens eine Information über die Operation in Verbindung mit einem Datum gespeichert wird, das in dem Zeitintervall liegt.

6. Zugriffsverfahren nach Anspruch 1, wobei das Datum, das beim Schritt des Speicherns in Verbindung mit der Nachricht gespeichert wird, das Empfangsdatum der Nachricht oder ein Datum ist, das in der empfangenen Nachricht enthalten ist.

7. Überwachungsvorrichtung (DT), **dadurch gekennzeichnet, dass** sie Folgendes aufweist:
ein Modul zum Empfangen (REC), zu mindestens einem zweiten Zeitpunkt (T4), mindestens einer Nachricht (M2), durch welche eine knotenbildende Vorrichtung (N1) eines Netzwerks (R) einer Mehrzahl von Vorrichtungen (N1, N2, N3), die Knoten des Netzwerks bilden und geeignet sind, über eine erste Kommunikationsverbindung (L1) zu kommunizieren, mindestens eine Operation (OP) meldet, die zu mindestens einem ersten Zeitpunkt (T1) von der knotenbildenden Vorrichtung (N1) durchgeführt wird, wobei die mindestens eine Operation auf Daten, die von der Vorrichtung über die erste Kommunikationsverbindung gesendet oder empfangen werden, oder auf eine interne Zustandsänderung der Vorrichtung bezogen ist;
ein Modul zur Speicherung (ENR) mindestens einer Information über die Operation;
ein Sendemodul (EMR) zur Übertragung, bei Empfang einer Anfrage bezogen auf mindestens eine Operation, die von mindestens einer knotenbildenden Vorrichtung durchgeführt wird, von einem Endgerät, das von der Mehrzahl von Vorrichtungen gesondert ist, über eine zweite Kommunikationsverbindung, einer Antwort auf die Anfrage, wobei die Antwort ausgehend von mindestens einem Teil der gespeicherten Informationen erstellt wird.

8. Computerprogrammprodukt umfassend Anweisungen zur Durchführung eines Zugriffsverfahrens nach einem der Ansprüche 1 bis 6, wenn es von einem Prozessor geladen und ausgeführt wird.

9. Informationsträger, der von einem Datenprozessor gelesen werden kann und Anweisungen eines Programms zur Ausführung eines Zugriffsverfahrens nach einem der Ansprüche 1 bis 6 aufweist.

## Claims

1. Method for accessing data relating to at least one operation implemented by at least one device (N1) forming a node of a network (R) of a plurality of devices (N1, N2, N3) forming nodes of said network and capable of communicating with one another via a first communication link (L1), **characterized in that** it comprises the following steps, implemented by an observation device (DT) connected to a terminal (T) distinct from said plurality of devices:
reception (E10), at at least one second instant (T4), of at least one message (M2) by which a node-forming device (N1) signals to the observation device (DT) at least one operation (OP) implemented at at least one first instant (T1) by said node-forming device (N1), said at least one operation relating to data transmitted or received by said device via the first communication link or on a change of internal state of said device;
storage (E12) of at least one item of information on said operation;
on reception of a request (RQ) relating to at least one operation implemented by at least one node-forming device, originating from a terminal (T), via a second communication link (LT), transmission (E26) of a response (RP) to said request, said response (RP) being generated from at least a part of the stored information.

2. Access method according to Claim 1, wherein the time interval between the first instant (T1) and the second instant (T4) is less than a predefined threshold value (VS) .

3. Access method according to Claim 1, wherein said message (M2) is received via a communication link set up between the observation device and a relay device capable of communicating with the node-forming device.

4. Access method according to Claim 3, wherein the received message (M2) contains an identifier of the node-forming device inserted by said relay device and/or a date inserted by the relay device.

5. Access method according to Claim 1, wherein said at least one item of information from said operation is stored in association with a date contained within said time interval.

6. Access method according to Claim 1, wherein the date stored in association with the message in the storage step is the date of reception of the message or a date contained in the received message.

7. Observation device (DT), **characterized in that** it comprises:
a reception module (REC) for receiving, at at least one second instant (T4), at least one message (M2) by which a node-forming device (N1) of a network (R) of a plurality of node-forming devices (N1, N2, N3) of said network capable of communicating via a first communication link (L1), signals at least one operation (OP) implemented at at least one first instant (Tl) by said node-forming device (N1), said at least one operation relating to data transmitted or received by said device via the first communication link or on a change of internal state of said device;
a storage module (ENR) for storing at least one item of information on said operation;
a sending module (EMR) for transmitting, in reception of a request relating to at least one operation implemented by at least one node-forming device, originating from a terminal distinct from said plurality of devices, via a second communication link, a response to said request, said response being generated from at least a part of the stored information.

8. Computer program product comprising instructions for implementing an access method according to one of Claims 1 to 6 when it is loaded and run by a processor.

9. Information medium that can be read by a data processor, and comprising instructions of a program for the execution of an access method according to one of Claims 1 to 6.
